# EUROPEAN PATENT SPECIFICATION

(11) **EP 0 587 542 B1**
(45) Date of publication and mention of the grant of the patent: **08.07.1998**
(21) Application number: 93830363.3
(22) Date of filing: 07.09.1993
(51) Int. Cl.: C03B 33/033, C03B 33/027, C03B 33/023, C03B 33/04, C03B 33/07

(54) **Method and apparatus for cutting a large glass sheet into smaller sizes**
Verfahren und Vorrichtung zum Zerschneiden von grossen Glasplatten in kleinere Abmessungen
Procédé et appareil pour découper une grande feuille de verre en plusieurs petites feuilles

(30) Priority: 09.09.1992 IT MO920117
(43) Date of publication of application: 16.03.1994
(73) Proprietor: COOPMES s.c. a.r.l., I-41038 San Felice sul Panaro (MO) (IT)
(72) Inventor: Rossetti, Dario, I-41037 Mirandola (Modena) (IT)
(74) Representative: Fiammenghi-Domenighetti, Delfina

(56) References cited:
- DE-A- 1 813 672
- DE-A- 3 038 676
- US-A- 1 920 641
- US-A- 2 302 174
- US-A- 3 520 457

## Description

The present invention relates to a method and to an apparatus for breaking a large initial glass sheet or pane into glass sheets of smaller sizes.

As it has already been recalled in the Italian Patent No. 1.082.333, the apparatus for obtaining breaking lines on a large initial glass sheet, - in order to obtain glass sheets of smaller sizes and shapes - , can be generally subdivided in two groups:
a) apparatus comprising a sliding bridge supporting a front trolley, which is transversally movable along a table, and on which bridge a device is mounted for obtaining predetermined scoring lines on a initial large glass sheet or pane, while this latter rests and is held in position on said table.
   After having performed the scoring lines on said large glass sheet, this latter is brought on an adjacent table, on which the breaking of the initial glass sheet is performed manually, so as to obtain glass sheets of smaller sizes and to remove their trimming portions; afterwards, (at least partially) the so obtained glass sheets of smaller sizes are manually brought, where it is required for the completion of the subsequent working operations. There are also other apparatus, in which the breaking operation (the removing of the trimming portions excepted), is done during the displacement of the large initial glass sheet:
b) apparatus, in which the large initial glass sheet is moved during each scoring and each breaking operation. The elements of glass sheets of smaller sizes obtained by the breaking operation, are then automatically displaced according to predetermined handling programs. When, and that happens often, it is necessary to perform on the so obtained glass sheets of smaller sizes, additional scoring and breaking operations, as can be necessary in order to produce glass sheets of smaller sizes having non rectilinear outlines, (for instance, glass windows for motor-vehicles), said glass sheets of smaller sizes are picked up and transferred on a second table, having a sliding bridge carrying a trolley, with an scoring device, and which are scored, transferred on an additional table and manually cut-off (broken).
   Such a working cycle is therefore very long; much space is required in order to obtain the scoring lines for the breaking operation; many operators are required; there exist many risks of accidents on the job and the final product cost is considerable.

DE 3038676 A1 discloses a device for scoring and breaking a glass sheet. This device includes a bridge or transverse beam which is movable on lateral guides by means of slides. The guides are disposed on each side of the cutting table. The beam or bridge supports suction cups. By means of the suction cups the device can break the glass sheet, when the latter is lifted at one side of the scoring line.

US 1,920,641 describes different embodiments of a device for separating glass sheets, using vacuum cups.

In one such embodiment suction cups are disposed below the glass sheet and the breaking of the sheet is performed by suction cups held manually by the operator and applied on the upper surface of the glass sheet, lifting it on the scoring line.

Other embodiments use pulleys and counterweights to lift the suction cups.

The present invention relates to a method and to an apparatus by means of which it is possible:
- to score and break the large initial glass sheet or pane into glass sheets of smaller sizes and of different shapes, by keeping, in a stationary position, the initial glass sheet onto a first supporting table;
- to subsequently score and break said initial glass sheet, in order to obtain secondary glass sheets of smaller sizes and of different shapes, by means of operations performed on the same first table without any translation therefrom;
- to remove the secondary glass sheets and discharge the scraps, by operating on said first table and transferring then everything on a second table, according to the predetermined program.

It is also possible to score and break initial glass sheets of stratified or multilayer type. In other words, in the known methods it was provided to obtain:
a)
   - scoring lines on the initial glass sheet on a first table, provided with a bridge, which is slidable longitudinally along said table;
   - displacing said glass sheet on a second table;
   - performing manually the breaking along the obtained scoring lines, and displacing the so obtained glass sheets of smaller sizes where it is required; or
b)
   - scoring lines on the initial glass sheet placed on a first table provided with a sliding bridge;
   - breaking said glass sheet in order to obtain glass sheets of smaller sizes by means of one or more breaking tools, during the transfer on an adjacent table.

In any case, all the so obtained glass sheets of smaller sizes, which require special scoring lines and shapes, must be picked up manually, scored again, and trimmed, one by one, on another table.

Thus, the invention provides a method of scoring and breaking large glass sheets according to claim 1, and an apparatus for carrying out this method according to claim 3.

A preferred embodiment of the method of the invention comprises the following steps:
- obtaining scoring lines on the initial glass sheet or pane, while it is maintained adherent to a first table, along which a sliding bridge is provided, carrying a sliding trolley, provided with means for performing the scoring lines;
- slightly lifting the large initial glass sheet, where each scoring line has been obtained, by means of suction cups, said initial glass sheet being cut-off, along said scoring line without producing crack lines;
- releasing and laying again (or letting automatically lay again), after the breaking step, the initial glass sheet, or more precisely, one or more of the so obtained glass sheets of smaller sizes;
- scoring, if it is so required, additional outlines shaped in different ways (if the program provides for it);
- breaking the peripheral trimming portions of the obtained glass sheets of smaller sizes by means of suction cups and by means of thin stems having a lower pointed end; and
- removing all the so obtained glass sheets of smaller sizes according to the program.

All the operative cycle, which is performed on the first table by means of displacements carried out along three axes perpendicular to each other, is entirely programmable.

The main advantages obtained by said method and said apparatus, with respect to known ones, are:
- a reduction of the number of the necessary means and devices, as tables, scoring devices, breaking devices, etc., which serve to perform the scoring and breaking cycle, thus saving consequently a great amount of space;
- a reduced cost of the apparatus;
- a reduced number of operators;
- a reduced (or even no) manual handling of the elements forming the plurality of the so obtained glass sheets of smaller sizes;
- an automation of the entire cycle;
- a reduction of the processing time;
- a reduced cost of the final product;
- no risk of accidents on the job for the operators.

The invention will be better understood and described in detail with reference to a preferred embodiment thereof and to the accompanying drawings, which are given only for illustrative and not limitative purposes, and in which:
- Figure 1 shows a diagrammatic elevation view taken in the direction F1 of the first table, that is associated with a bridge movable in the direction F1, and which carries a front trolley supporting an scoring device, while a second table is aligned with the first one, but it is spaced apart from it by a short gap;
- Figure 2 is the top view of the first and second table, shown in Figure 1;
- Figure 3 is the top view of a large initial glass sheet with a pattern of scoring lines, provided to obtain a possible program of scoring lines, so as to obtain glass sheets of smaller sizes having rectangular shapes;
- Figure 4 shows the large glass sheet, shown in Figure 2, with a variant of a pattern apt to obtain glass sheets of smaller sizes having rectangular and curvilinear peripheral outlines;
- Figures 5 and 6 show respectively, in an enlarged scale, a partial vertical cross sectional view taken along line (A-A) of Figure 2 and, respectively, a partial top view of the rear side of the sliding bridge to better illustrate the arrangement of the suction cups and of the stems having a lower pointed end with respect to the supporting plane of the initial glass sheet on said first table;
- Figure 7 schematically shows a partial longitudinal sectional view, taken in the direction F1 of the arrangement of the suction cups and of the vertical stems having a lower pointed end, during the breaking of a trimming portion;
- Figure 8, is similar to Figure 7, but it schematically shows how is carried out the cutting-off of a glass sheet of small size, which was obtained from the initial glass sheet;
- Figures 9 and 10 show, in succession, the two operative steps required for breaking a large, multilayer glass sheet having at least two glass layers.

In the drawings, the same alpha-numeric references indicate the same elements or devices.

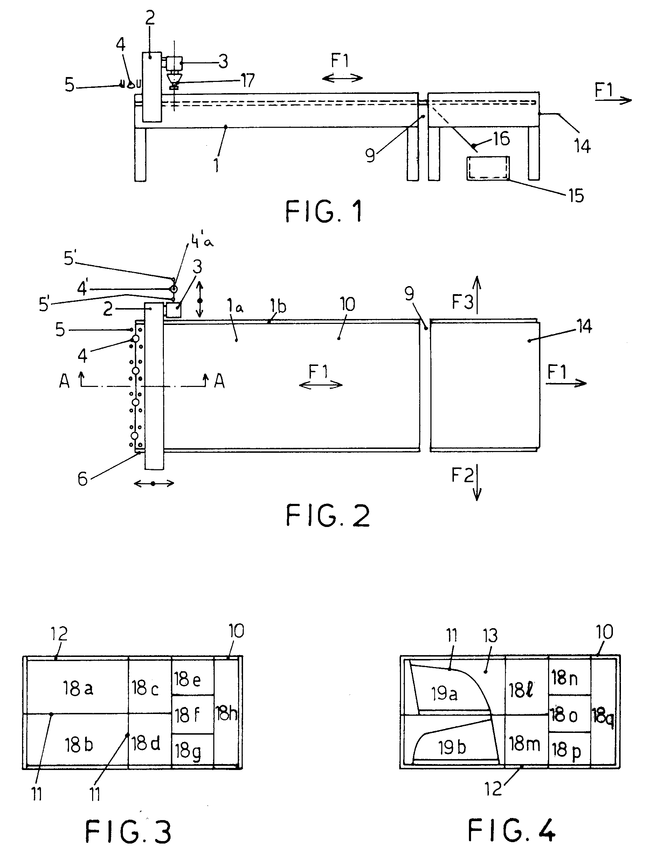

With reference to Figures 1 and 2, 1 indicates generally the first table, provided with a supporting plane 1a and with lateral guide boards 1b; on the table 1 is placed and maintained adherent the large initial glass sheet 10. Along said table 1, there is mounted a bridge 2 slidable in the direction F1 of Figure 1 and supporting on its front side a trolley, generally indicated with 3, which is movable transversally, perpendicularly to the direction F1 and which carries means 17 provided with an scoring pointed device for performing scoring lines on the initial glass sheet 10, said means being realized according to known features. The only important modifications and adaptations which have been done, in order to make the apparatus suited to obtain the breaking of the initial glass sheet 10 so as to have glass sheets of smaller sizes 18 and/or 19 of different shapes or outlines, according to the present invention, are:
a) the assembling, on the rear side of the bridge 2, of a suitable number of suction cups 4 having vertical axes 4a, and of vertical stems having a lower pointed end 5, supported by the arms 6 and respectively 8 and projecting rearwards from the rear wall 2a of the bridge 2 in the sense opposite to that of the arrow F1.

The suction cups 4 are of a conventional type employed in the glass industry, whereas the elements 5 are conventional vertical pressure stems having a lower pointed end, associated with means for controlling their height.

It should be appreciated that, near one of the lateral walls of the trolley 3 there are assembled by suitable supporting means, i.e. a suction cup 4' having a vertical shaft 4a' and which is positioned between two contacting stems 5' (Figure 2), the height of which is adjustable, in order to allow cutting-off steps along any engraving line, parallel to the direction F1.

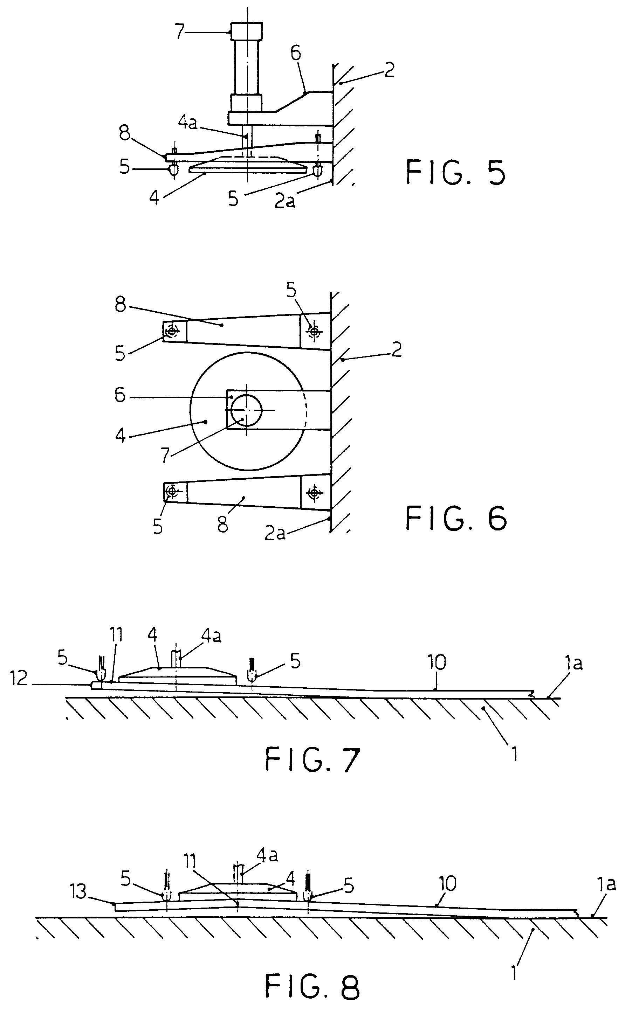

Referring, more in particular, to Figures 5 and 6, it is to be noted that each bracket or arm 6, projecting rearwards from the wall 2a, is crossed by the shaft 4a of a suction cup 4, said shaft being connected to an oleodynamic actuator 7 of a linear travel.

Reference numbers 8 indicate brackets or arms projecting rearwards from the wall 2a of the bridge 2, which are made integral with this latter, said brackets 8 carrying the stems 5.

In Figure 3 it is shown a first subdivision pattern of an initial glass sheet 10 made by the scoring lines 11, into a plurality of glass sheets of smaller sizes and of rectangular shapes, indicated by 18a...to 18h, whereas in Figure 4 the initial glass sheet 10 is subdivided by scoring lines 11 in a plurality of rectangular glass sheets of smaller sizes 18l to 18q and in other glass sheets 19a and 19b having different shapes or outlines.

In said Figures 3 and 4, reference numbers 12 indicate the trimming portions, and in Figure 4, 13 indicates the scraps. It is to be noted, that there already exist tables, with slidable bridges, on which suction cups are mounted on the rear side of said bridge, but it has been never provided bridges carrying stems with lower pointed ends.

The arrangement of the suction cups and their function is known, but they are provided only in relation to the operations of grasping and pushing forwards the large initial glass sheet onto a second table (after having performed the scoring step), whereon said glass sheet will be cut-off manually into glass sheets of smaller sizes. The features of said tables are not programmable.

On the contrary, by using the apparatus of the present invention, on the first table 1 it is possible to perform the operation of obtaining the scoring lines 11 on the initial glass sheet 10, according to a predetermined program, which takes account of the optimization of the breaking operation, suggested by each batch of the glass sheets 18 and 19 to be obtained in the daily work, as for example, according to the two variants of Figures 3 and 4.

Figure 7 shows how the suction cups 4 and the stems 5 are positioned on the initial glass sheet 10, by an appropriate displacement of the sliding bridge 2, the glass sheet 10 being supported by the plane 1a of the first table 1. The suction cups 4 are disposed so as to be able to grasp the glass sheet 10 near the scoring line 11 which separates the trimming portion 12 to be removed, from the remaining part of the glass sheet 10, whereas the most external pressure stems 5 act on said trimming portions 12 and the most internal ones can press against on the glass sheet 10.

When the glass sheet 10, as shown in Figure 7, has been slightly lifted by the suction cups 4, the pressure stems 5 cause the separation of the pertinent trimming portion 12. The trimming portion 12, after its separation falls down on the upper surface of the plane 1a of table 1. The glass sheet 10 is allowed to fall down again by means of the suction cups 4; the glass sheet 10 and the trimming portion 12 will again rest on the supporting plane 1a of table 1 in the same position, which they occupied, before the breaking of the trimming portion 12.

Figure 8 shows how the breaking operation of one or more of the glass sheet of smaller sizes 18 or 19 is performed, sheets, which have been obtained from the initial glass sheet 10.

The only difference, with respect to the breaking of the trimming portions 12, is due to the fact that the bridge 2 is used when it is placed in such a way that the suction cups 4 have been positioned just over the respective scoring line 11, while the stems 5 act now as stopping and pressure means.

Each glass sheet 18 or 19, of smaller size, obtained by breaking the initial glass sheet 10, will again occupy on the plane 1a of the table 1, exactly the same position, where it was placed before the scoring and breaking steps.

Afterwards, in the case that all or part of the glass sheets of smaller sizes to be obtained, (after their breaking), must be broken along shaped curved lines, as shown, for instance, in Figure 4, for the glass sheets, indicated by 19a, 19b, after having obtained the shaped scoring lines 11 on said glass sheets and, after having broken the external trimming portions 12 from the respective glass sheets 19a, 19b, the scraps 13 are separated in the same way, as described for the trimming portions 12, and the scoring and breaking operations are thus completed, without having removed neither the glass sheet 10 nor the glass sheets of smaller sizes 18 and 19 from the supporting plane 1a of table 1 carrying the sliding bridge 2.

Afterwards, the assembly of the glass sheets 18 and 19 will be let slide forwards automatically, till it reaches the second table 14, aligned with table 1, but spaced apart from this latter by a short gap 9. During this displacement, the trimming portions 12 and the scraps 13 fall down on an underlying chute plane 16, which guides them into a collecting container 15.

On said table 14, which is of a conventional type and has lateral board walls, which can be turned out towards the outside, the various glass sheets 18 and 19 can be sent out in one or the other of the three directions indicated by the arrows F1-F2-F3 in Figure 2, by means of motor-driven endless belts and rollers (not shown).

It is to be noted that each glass sheet 10, is fed on the table 1, by known feeding devices.

The breaking cycle comprises:
- a small number of operative devices and, therefore, it is very short and not much expensive;
- it is automatic;
- it is programmable;
- and, as already above mentioned, the scoring and the breaking steps, as well as the breaking of shaped outlines are performed in succession, without any translation of the initial glass sheet 10 from the plane 1a of table 1.

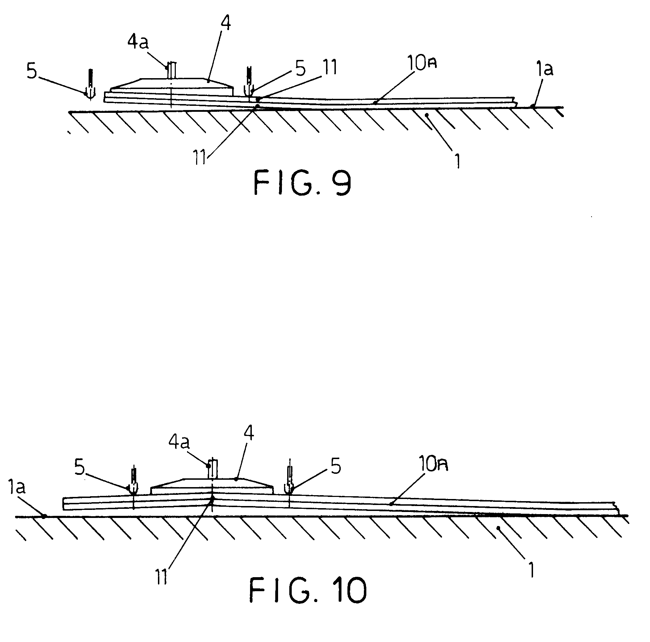

With reference to Figures 9 and 10, it should be noted that a multilayer glass sheet 10A can also be scored and broken. In such a case the cycle will be as follows:
- after having obtained the scoring lines 11 on the upper surface of the glass sheet 10A, it is necessary that the glass sheet 10A has to be transferred again onto the feeding means, in order to overturn it, whereafter it will be again transferred on the plane 1a of table 1 provided with the sliding bridge 2. Then it is necessary to reset the initial position of the bridge and trolley and then to score the second outer surface of the plasticized glass sheet 10A just over the position of the previously scored line. Then, by lifting an edge portion of the glass sheet 10A, as shown in Figure 9, by means of the suction cups 4, the now lower layer of the glass sheet 10A can be broken along its scoring line 11, with the cooperation of the pressure stems 5.
   Then, owing to the suction cups, which are now aligned with the foregoing scored line (Figure 10), and with the cooperation of the pressure stems 5, the upper layer of the multilayer glass sheet 10A will be broken.
   After the breaking steps have been carried out, the plastic film which is present in the multilayer glass sheet 10A, is manually cut by means of a cutting tool; and
- the glass sheets of smaller sizes so obtained from the glass sheet 10A, as described above, are removed.

Obviously the invention is not limited to the embodiments described and shown, but it also comprises all the variants and similar forms falling within the scope of the claims, as for instance:
a) the suction cups 4 located behind the sliding bridge 2 could be supported by one horizontal beam applied parallelely and behind the rear wall 2a of the bridge 2, associated with actuators which permit to move up or down said beam together with said suction cups;
b) the means provided to move vertically the suction cups and/or a beam supporting said suction cups, may be actuated mechanically, by an oleodynamically, or by other suitable known devices.

## Claims

1. A method of scoring and breaking large glass sheets (10, 10A), respectively placed on a plane supporting means (1a), so as to obtain from each large glass sheet (10, 10A) a plurality of glass sheets of smaller sizes and of different shapes (18, 19), characterized in that the obtained glass sheets have their final sizes, that the operative cycle is completely performed on said plane supporting means, without effecting any horizontal displacement of the initial glass sheet (10, 10A), and that the breaking is performed by a short vertical lifting and lowering of the scored portions of said glass sheet, so that on said plane supporting means, besides the glass sheets (18, 19) of smaller final sizes, also the trimming portions (12) and the scraps (13) will be collected.

2. A method according to claim 1, wherein the initial glass sheet (10A) consists of a multilayer glass sheet, on the upper surface of which scoring lines (11) are made when the glass sheet is on the plane supporting means (1a), whereafter said glass sheet is picked up again by the feeding means and overturned, in order to be placed, in this latter condition, on the plane supporting means (1a) formed by a plane (1a) of a table (1), whereafter scoring lines are made on the now upper surface of the glass sheet (10A), now placed in overturned condition, which scoring lines lie just over the scoring lines (11) obtained in the first step, i.e. before its overturn, whereafter an edge portion of the glass sheet (10A) will be lifted up to a short distance from the plane (1a) by means of cups (4) and the part concerned of one layer only will be cut-off with the co-operation of pressure stems (5), whereafter the other layer of said overturned glass sheet (10A) is broken, while, after having carried out the breaking of both two layers of the glass sheet (10A), the plastic film, which is present in said multilayer glass sheet (10A), is cut manually.

3. An apparatus for carrying out the method as claimed in claim 1, comprising a first table (1), with a horizontal plane (1a), for supporting a large glass sheet (10, 10A), and having longitudinal vertical guide boards (1b), along which first table (1) can slide, in the longitudinal direction (F1), a bridge (2) which carries, on its front side, a trolley (3), horizontally slidable in a direction perpendicular to the longitudinal direction (F1), said trolley carrying a device (17) for obtaining scoring lines (11) on said glass sheet (10, 10A), characterized in that means (6) are provided, projecting rearwards from the rear wall (2a) of the bridge (2), for supporting a plurality of suction cups (4) which can be moved vertically and which are associated with actuators (7), as well as means (8) for supporting pairs of pressure stems (5), each having a lower pointed end, and which have vertical axes and an adjustable height, while a second table (14) is aligned with the first table (1), but is spaced apart from this latter thus forming a short gap (9), the obtained glass sheets (18 and/or 19) of smaller sizes, being successively pushed on said second table (14), which glass sheets of smaller sizes, according to their respective destination, can be sent out from said second table in the longitudinal directions (F1) or in one of two directions (F2, F3) perpendicular to the longitudinal direction, whereas through the gap (9) the trimming portions (12) and the scraps (13) can be discharged on an underlying chute plane (16) so as to be collected into a underlying container (15).

4. An apparatus as claimed in claim 3, wherein arms (6) project from the rear wall (2a) of the bridge (2), along horizontal planes, perpendicular to the wall (2a), each arm (6) being designed to support a suction cup (4), whose vertical shaft (4a) passes through said arm (6), said shaft (4a) being associated with an actuator (7), whereas other arms (8), arranged like said first arms (6), support pairs of pressure stems (5), whose height may be adjusted.

5. An apparatus as claimed in claims 3 and 4, wherein at one of the lateral sides of the trolley (3), a suction cup (4') having a vertical shaft (4a') is assembled by suitable supporting means, said vertical shaft (4a') being associated with an actuator, while a pair of pressure stems (5') are positioned on the diametrically opposite sides of said suction cup (4'), said three elements (5', 4', 5') being aligned in the direction of the bridge (2), said suction cup (4') and said pair of stems (5') enabling the breaking of the glass sheet (10, 10A) along a longitudinal scoring line (11), i.e. in the direction of the arrow (F1).

6. An apparatus as claimed in claims 3 to 5, wherein it comprises programming means for controlling the longitudinal displacements of the bridge (2) along the table (1), in order to correctly position the suction cups (4 or 4') and the pressure stems (5 or 5'), with respect to the scoring lines (11), in the most suitable locations for performing the breaking-off of the trimming portions (12) of the glass sheets (18, 19) designed to be cut-off, as well as the elimination of the scraps (13) in the case of glass sheets (19) with curved shapes or outlines.

7. An apparatus as claimed in claims 3 to 6, wherein the suction cups (4), which are supported behind the bridge (2) are supported with their vertical shafts (4a) by a unique horizontal beam, movable up or down parallelely to the wall (2a) of the bridge (2), and associated with actuators (7) or the like, which permit to lower or lift said beam, together with the suction cups (4).

## Patentansprüche

1. Verfahren zum Gravieren und Zerschneiden von grossen Glasplatten (10, 10A), die auf einem ebenen Stützmittel (1a) gehalten werden, um aus jeder grossen Glasplatte (10, 10A) eine Vielzahl von kleineren Glasplatten mit verschiedener Form (18,19) zu erhalten, dadurch gekennzeichnet,dass die so erhaltenen Glasplatten ihre endgültige Gestalt aufweisen, das Arbeitszyklus vollständig auf dem genannten ebenen Stützmittel ausgeführt wird, ohne irgendwelche horizontale Verschiebung der Ausgangsplatte aus Glas (10,10A) durchzuführen, und dass das Zerschneiden durch ein geringfügiges vertikales Heben und Senken der gravierten Teile der Glasplatte erreicht wird, so dass auf dem genannten ebenen Stützmittel, nicht nur die kleineren Glasplatten (18, 19). sondern auch die Abfälle, d.h. die übriggebliebenen Randabschnitte (12) und das Restmaterial (13) aus Glas gesammelt werden.

2. Verfahren nach Anspruch 1, dadurch gekennzeichnet dass die Ausgangsplatte (10A) aus Glas eine mehrschichtige Glasplatte ist, auf deren Oberseite Gravierungslinien (11) erzeugt werden, wenn die Glasplatte auf dem ebenen Stützmittel (1a) aufliegt, und dass danach die genannte Glasplatte von neuem durch die Fördermittel entnommen und umgekippt wird, um wiederum in dieser Lage auf die von einer Ebene (1a) gebildeten ebenen Stützmittel (1a) eines Tisches (1) gelegt zu werden, wobei danach Gravierungslinien auf der neuen Oberseite der Glasplatte (10A) erhalten werden, welche nun in umgekippter Lage liegt, und wobei die letzteren Gravierungslinien genau oberhalb der Gravierungslinien (11) liegen, die in den ersten Arbeitsschritt erhalten worden sind, d. h. vor dem Umkippen der Glasplatte; wobei danach ein Randabschnitt der Glasplatte (10A) um einen geringfügigen Abstand von der Ebene (1a) mittels Saugköpfen (4) gehoben wird und der entsprechende Teil - nur einer Schicht - zerschnitten wird, unter der Mitwirkung von Druckstiften (5), und anschliessend die andere Schicht der genannten umgekippten Glasplatte (10A) zerschnitten wird, während, nachdem beide Schichten der Glasplatte (10A) gebrochen worden sind, die in der mehrschichtigen Glasplatte (10A) enthaltene Plastikfolie manuell geschnitten wird.

3. Vorrichtung zum Durchführen des Verfahrens nach Anspruch 1, bestehend aus einem mit länglichen vertikalen Führungsbrettern (1b) ausgestatteten ersten Tisch (1) mit horizontaler Ebene (1a), zum Halten einer grossen Glasplatte (10, 10A),einer längs des ersten Tisches (1) in longitudinaler Richtung (F1) bewegbaren Brücke (2) mit einem Schlitten (3) auf der Stirnseite, welcher in einer zur longitudinalen Richtung (F1) senkrechten Richtung horizontal beweglich ist und eine Vorrichtung (17) zum Erzeugen von Gravierungslinien (11) auf der gennanten Glasplatte (10, 10A) trägt, dadurch gekennzeichnet,dass Mittel (6) vorhanden sind, welche sich nach rückwärts von der Rückseitenwand (2a) der Brücke (2) erstrecken und eine Vielzahl von Saugköpfen (4) tragen, welche vertikal durch zugeordnete Antriebsmechanismen (7) bewegbar sind, und dass auch Mittel (8) zum Tragen von Druckstiftpaaren (5) vorhanden sind, welche ein zugespitztes unteres Ende sowie vertikale Achsen und eine regelbare Höhenlage aufweisen; wobei ein zweiter Tisch (14) mit dem ersten Tisch (1) fluchtend aber unter einem bestimmten Abstand angeordnet ist, um damit einen kurzen Zwischenraum (9) zu bilden, und die kleineren Glasplatten (18 und/oder 19) nacheinander auf den zweiten Tisch (14) verschoben werden, und je nach Benutzung, von diesem zweiten Tisch (14) in longitudinaler Richtung (F1) oder in einer der beiden (F2, F3) zur longitudinalen Richtung senkrechten Richtungen entfernt werden, während die Randabschnitte (12) und das Restmaterial (13) auf einer unteren Rampe (16) entladen werden können, indem sie den Zwischenraum (9) passieren und schliesslich in einem unteren Behälter (15) gesammelt werden.

4. Vorrichtung nach Anspruch 3, dadurch gekennzeichnet, dass Tragarme (6) sich längs horizontalen Ebenen von der Rückseite (2a) der Brücke (2) erstrecken, senkrecht zur Rückseitenwand (2a), und dass jeder Arm (6) einen Saugkopf (4) trägt, dessen vertikaler Schaft (4a) sich durch den Tragarm (6) selbst erstreckt, und der Schaft (4a) einem Antriebsmechanismus (7) zugeordnet ist, während andere Arme (8) die genauso angeordnet sind wie die ersten Arme (6), höhenverstellbare Druckstiftpaare (5) tragen.

5. Vorrichtung nach Anspruch 3 oder 4, dadurch gekennzeichnet, dass auf einer Seite des Schlittens (3) ein Saugkopf (4') mit vertikalem Schaft (4a') unter Verwendung von zweckmässigen Haltemitteln angeordnet ist, und dass dieser vertikale Schaft (4a') einem Antriebsmechanismus zugeordnet ist, während ein Paar von Druckstiften (5') auf diametral entgegengesetzten Seiten des genannten Saugkopfes (4') angeordnet sind, und alle drei Teile (5', 4', 5') parallel zur Brücke (2) liegen; wobei der Saugkopf (4') und die beiden Stifte (5') die Glasplatte (10, 10A) längs einer longitudinalen Gravierungslinie (11), d.h. in Richtung des Pfeils (F1), zu zerschneiden erlauben.

6. Vorrichtung nach Anspruch 3 bis 5, dadurch gekennzeichnet dass sie Programmiermittel zum Steuern der longitudinalen Bewegungen der Brücke (2) längs des Tisches (1) umfasst, welche dazu dienen die Saugköpfe (4 oder 4') und die Druckstifte (5 oder 5') in die richtige Lage bezüglich der Gravierungslinien (11) zu bringen, und um die bestmöglichen Lagen für das Trennen der Randabschnitte (12) der zu zerschneidenden Glasplatten (18, 19) sowie für die Beseitigung des Restmaterials (13) - im Falle von Glasplatten (19) mit runden Formen und Linien - zu erreichen.

7. Vorrichtung nach Anspruch 3 bis 6, dadurch gekennzeichnet dass die Saugköpfe (4), die auf der Rückseite der Brücke (2) gelagert sind, mittels ihrer vertikalen Schäfte (4a) durch einen gemeinsamen nach oben und nach unten parallel zur Brückenwand (2a) der Brücke (2) beweglichen horizontalen Träger gehalten werden, und dass diesem Träger Antriebsmechanismen (7) zugeordnet sind, welche den Träger und die Saugköpfe (4) gleichzeitig heben bzw. senken.

## Revendications

1. Procédé pour graver et découper de grandes feuilles de verre (10, 10A), placées respectivement sur un moyen plat de support (1a), de façon à obtenir, à partir de chaque grande feuille de verre (10, 10A), une pluralité de feuilles de verre plus petites ayant des formes différentes (18, 19), caractérisé en ce que les feuilles de verre obtenues ont leurs dimensions finales, que le cycle opérationnel est entièrement accompli sur ledit moyen plat de support, sans aucun déplacement horizontal de la feuille de verre initiale (10, 10A), et que le découpage est obtenu par des courts mouvements verticaux de soulèvement et abaissement des portions gravées de ladite feuille de verre, de façon que sur ledit moyen plat de support, en plus des feuilles de verre (18, 19) de dimensions finales réduites, on pourra recueillir même les portions de rognage (12) et les déchets (13) de verre.

2. Procédé selon la Revendication 1, caractérisé en ce que la feuille de verre initiale (10A) consiste à une feuille de verre multicouches, sur la surface supérieure de laquelle sont réalisées des lignes de gravure (11) quand la feuille de verre se trouve sur le moyen plat de support (1a), et qu'ensuite ladite feuille de verre est soulevée par le moyen d'alimentation et renversée pour être placée, en cette condition, sur le moyen plat de support (1a) formé par le plan (1a) d'un table (1), et qu'ensuite des lignes de gravure sont obtenues sur l'actuelle surface supérieure de la feuille de verre (10A), qui a été renversée, lesdites lignes de gravure correspondant exactement aux lignes de gravure (11) obtenues pendant la première phase, soit avant le renversement de la feuille, et qu'ensuite une portion de contour de la feuille de verre (10A) est soulevée jusqu'à une courte distance du plan (1a) par des ventouses (4) et la partie intéressée d'une couche seulement est coupée à l'aide de tiges à pression (5), et qu'ensuite l'autre couche de ladite feuille de verre renversée (10A) est découpée, alors que, après avoir accompli le découpage des deux couches de la feuille de verre (10A), le film en plastique qui se trouve à l'intérieur de ladite feuille de verre multicouches (10A) est coupé manuellement.

3. Appareil pour réaliser le procédé selon la Revendication 1, comprenant un premier table (1) avec un plan horizontal (1a) pour supporter une grande feuille de verre (10, 10A) et avec des planches verticales longitudinales de guidage (1b) pour permettre le coulissement le long du premier table (1) en direction longitudinale (F1), d'un pont (2) qui présente, du côtè frontal, un chariot (3) qui peut glisser horizontalement selon la direction longitudinale (F1), ledit chariot étant muni d'un dispositif (17) pour obtenir des lignes de gravure (11) sur ladite feuille de verre (10, 10A), caractérisé en ce que des moyens (6) sont prevus qui se projettent en arrière de la paroi postérieure (2a) du pont (2) pour supporter une pluralité de ventouses (4) qui peuvent être déplacées verticalement et qui sont associées à des dispositifs d'activation (7), et des moyens (8) qui supportent des couples de tiges à pression (5), chacune ayant une extrémité inférieure pointue et ayant des axes verticales et une hauteur réglable, alors qu'un deuxième table (14) est aligné au premier table (1) mais est espacé de façon à créer un petit écart (9), les feuilles de verre obtenues (18 et/ou 19) de dimensions plus petites étant ensuite poussées sur ce deuxième table (14) et envoyées, selon leur destination respective, dudit deuxième table en direction longitudinale (F1), ou en une des deux directions (F2, F3) perpendiculaires à la direction longitudinale, alors que les portions de rognage (12) et les déchets (13) de verre peuvent être déchargées à travers l'écart (9) dans un plan de chute (16) sous-jacent de façon qu'ils sont recueillis dans un récipient (15) sous-jacent.

4. Appareil selon la Revendication 3, caractérisé en ce que des bras (6) se projettent de la paroi postérieure (2a) du pont (2) le long de plans horizontaux perpendiculaires à la paroi (2a), chaque bras (6) étant conçu pour supporter une ventouse (4) dont l'arbre vertical (4a) traverse ledit bras (6), ledit arbre (4a) étant associé à un dispositif d'activation (7), alors que d'autres bras (8), rangés comme lesdits premiers bras (6) supportent des couples de tiges à pression (5) dont la hauteur peut être réglée.

5. Appareil selon les Revendications 3 et 4, caractérisé en ce qu'une ventouse (4') avec un arbre vertical (4a') est montée sur un des cotés latéraux du chariot (3) par des moyens de support appropriés, ledit arbre vertical (4a') étant associé à un dispositif d'activation, alors qu'un couple de tiges à pression (5') est placé sur les cotés diamétralement opposés de ladite ventouse (4'), lesdits trois éléments (5', 4', 5') étant alignés selon la direction du pont (2), ladite coupe aspirante (4') et ledit couple de tiges (5') permettant le découpage de la feuille de verre (10, 10A) le long d'une ligne de gravure longitudinale (11), soit selon la direction de la flêche (F1).

6. Appareil selon les Revendications de 3 à 5, caractérisé en ce qu'il comprend des moyens de programmation pour contrôler les déplacements longitudinaux du pont (2) le long du table (1), de façon à positionner correctement les ventouses (4 ou 4') et les tiges à pression (5 ou 5') par rapport aux lignes de gravure (11), dans les positions les plus appropriées à réaliser le détachement des portions de rognage (12) des feuilles de verre (18, 19) qui doivent être découpées, ainsi que l'élimination des déchets (13) en cas de feuilles de verre (19) ayant des formes ou des contours curvilignes.

7. Appareil selon les Revendications de 3 à 6, caractérisé en ce que les ventouses (4) qui sont supportées derrière le pont (2), ont leurs arbres verticaux (4a) supportés par une planche unique qui peut se déplacer en haut ou en bas parallèlement à la paroi (2a) du pont (2), et est associée à des dispositifs d'activation (7) ou similaires qui permettent de soulever ou baisser ladite planche avec les ventouses (4).
